# EUROPÄISCHE PATENTANMELDUNG

(11) **EP 0 532 821 A1**
(43) Veröffentlichungstag der Anmeldung: **24.03.1993**
(21) Anmeldenummer: 91890219.8
(22) Anmeldetag: 19.09.1991
(51) Int. Cl.: A01G 23/00, A01B 59/043, B66C 23/44

(54) **Holzrückewagen**

(71) Anmelder: Dechant, Franz Xaver, A-5121 Tarsdorf/Ostermiething (AT)
(72) Erfinder: Dechant, Franz Xaver, A-5121 Tarsdorf/Ostermiething (AT)
(74) Vertreter: Hübscher, Heiner, Dipl.-Ing.

(57) **Zusammenfassung**

Ein Holzrückewagen (1) besteht aus einem ladekranbestückten Einachsanhänger (2), der einen über ein Schwenklager (7) mit vertikaler Schwenkachse am Fahrgestell angelenkten, bedarfsweise verriegelbaren Anbaubock (6) zum Anbau an das hydraulische Dreilenkersystem eines Schleppers besitzt.

Um die Geländegängigkeit und Einsatzfähigkeit zu erhöhen, weist der Anbaubock (6) einen über ein Schwenklager (10) mit in Fahrtrichtung liegender horizontaler Schwenkachse abgestützten Querholm (9) für den Anschluß der Unterlenker und eine Sperreinrichtung (11) zum Fixieren des Querholms (9) auf.

## Beschreibung

Die Erfindung bezieht sich auf einen Holzrückewagen, bestehend aus einem ladekranbestückten Einachsanhänger, der einen über ein Schwenklager mit vertikaler Schwenkachse am Fahrgestell angelenkten, bedarfsweise verriegelbaren Anbaubock zum Anbau an das hydraulische Dreilenkersystem eines Schleppers besitzt.

Ein solcher Holzrückewagen ist aus der AT-PS 386 506 bereits bekannt und hat sich bisher auch gut bewährt, da er mit einem üblichen Traktor kombiniert werden kann und sich der Ladekran nicht nur zum Be- und Entladen, sondern auch zur Halterung des aufgeladenen Holzes für den Transport verwenden läßt. Außerdem ist durch die Schwenklagerung des Anbaubockes und den Anschluß des Holzrückewagens am Dreilenkersystem des Schleppers einerseits eine Knicklenkung möglich, anderseits, vorzugsweise zum Rückwärtsfahren, sogar ein Anheben des verriegelten Rückewagens, womit ein äußerst wendiges, geschickt manöverierbares und leistungsstarkes Holzbringgerät vorliegt. Selbstverständlich läßt sich dabei der Ladekran statt mit einer Holzzange auch mit anderen Werkzeugen, wie Tief- und Grabenlöffel, Erdschaufel, Erdbohrer, Dunggreifer, Rübenkorb u.dgl. ausrüsten, so daß der Holzrückewagen zusätzlich als Bagger, Erntefahrzeug od.dgl. Arbeitsgerät einsetzbar ist.

Bei den bekannten Holzrückewagen ist der Anbaubock zum Anbau an das hydraulische Dreilenkersystem eines Schleppers mit starren Anschlußzapfen ausgestattet, auf die die Unterlenker des Dreilenkersystems mit entsprechenden Anschlußlöchern aufgesteckt werden, so daß je nach Vorhandensein von Langlöchern oder eines radialen Spiels eine gewisse Bewegungsfreiheit zwischen den Unterlenkern und dem Anbaubock gewonnen wird, die eine Querverwindung des Anhängers gegenüber dem Schlepper erlaubt. Diese Verwindungsmöglichkeit ist jedoch recht beschränkt und beeinträchtigt dadurch die Geländegängigkeit des Holzrückewagens und vor allem auch die seitliche Einsatzfähigkeit des Ladekrans, da eben einerseits die Relativbeweglichkeit für das geländebedingte Querverwinden zu gering bleibt, anderseits aber die vorhandene Bewegungsfreiheit die Kraftübertragung vom Anhänger auf den Schlepper zur Kranabstützung ungünstig beeinflußt. Um hier eine Verbesserung zu erreichen, wurde gemäß dem DE-GbM 87 05 231 auch schon vorgeschlagen, das Bewegungsspiel der Anschlußzapfen in den Langlöchern über einen Hydraulikstempel bedarfsweise zu unterbinden, was zwar die Kraftübertragungsverhältnisse begünstigt, aber durch den gewaltsamen Spielausgleich zu einer horizontalen Ausrichtung des Anhängers und damit zur Verringerung der Standfestigkeit führt.

Wie die DE-OSen 33 16 128, 37 36 872 und 37 39 291 zeigen, gibt es außerdem bereits verschiedene schlepperseitige Anbauvorrichtungen, die mit um eine in Fahrtrichtung liegende Horizontalachse schwenkbaren Anschlußbalken bzw. Aufnahmeböcken ausgestattet sind, deren Schwenkbarkeit gegebenenfalls über Dämpfer gebremst oder zur Einhaltung einer Transportposition in einer Mittelstellung verriegelt werden kann.

Die querverschwenkbaren Anschlußteile sind dabei in das Dreilenkersystem des Schleppers integriert und zur Anwendung bei Anhängern völlig ungeeignet, wozu noch kommt, daß diese recht aufwendigen Anbauvorrichtungen sicherlich eine entsprechende Bewegungsfreiheit und Geländegängigkeit mit sich bringen, hinsichtlich der für einen Holzrückewagen erwünschten Kraftübertragung vom Anhänger zum Schlepper aber nicht befriedigen können.

Der Erfindung liegt daher die Aufgabe zugrunde, diese Mängel zu beseitigen und einen Holzrückewagen der eingangs geschilderten Art zu schaffen, der sich ohne großen Mehraufwand durch seine besondere Geländegängigkeit und seine gesteigerte Einsatzfähigkeit auszeichnet.

Die Erfindung löst diese Aufgabe dadurch, daß der Anbaubock einen an sich bekannten, über ein Schwenklager mit in Fahrtrichtung liegender horizontaler Schwenkachse abgestützten Querholm od. dgl. für den Anschluß der Unterlenker und eine Sperreinrichtung zum Fixieren des Querholms in beliebiger Schwenklage aufweist. Ein über diesen Anbaubock an einem Schlepper angebauter Holzrückewagen kann frei gegenüber dem Schlepper quer zur Fahrtrichtung schwingen und Bodenunebenheiten auspendeln, so daß die angestrebte Geländegängigkeit gewährleistet ist und es während der Fahrt zu keinen die Bodenhaftung verringernden Verspannungen zwischen Schlepper und Anhänger kommen kann. Wird dann beim Einsatz des Kranes die Sperreinrichtung aktiviert, ist der Querholm in der jeweiligen Schwenklage fixiert und die auftretenden Belastungen werden uneingeschränkt über den Anbaubock auf den Schlepper übertragen, wodurch die für den entsprechenden Kraneinsatz gewünschte Standfestigkeit und Seitenstabilität gegeben sind.

Die Sperreinrichtung zum Fixieren des schwenkbar gelagerten Querholms kann auf unterschiedlichste Weise ausgebildet sein, es können mechanische Klemmen, Riegel u.dgl. vorgesehen sein, doch ist es besonders vorteilhaft, wenn erfindungsgemäß die Sperreinrichtung aus einem am Querholm angreifenden Hydraulikzylinder besteht, dessen Zylinderräume miteinander durch eine über ein Absperrorgan führende Verbindungsleitung kurzgeschlossen sind. Bei offener Verbindungsleitung kann der Hydraulikzylinder im wesentlichen widerstandsfrei seine Hubbewegung ausüben und dadurch die Schwenkbewegung des Querholms mitmachen. Sobald jedoch das Absperrorgan die Verbindungsleitung sperrt, ist auch eine Hubbewegung des Hydraulikzylinders in jeder betreffenden Lage gesperrt und der Querholm wird ebenfalls blockiert. Es kommt zu einer stufenlosen Verriegelung des Querholms, die sich auch bequem vom Schleppersitz aus betätigen läßt, wenn auf einfache Weise das Absperrorgan als Schlepperarmatur installiert und die Verbindungsleitung über dieses Absperrorgan geführt wird.

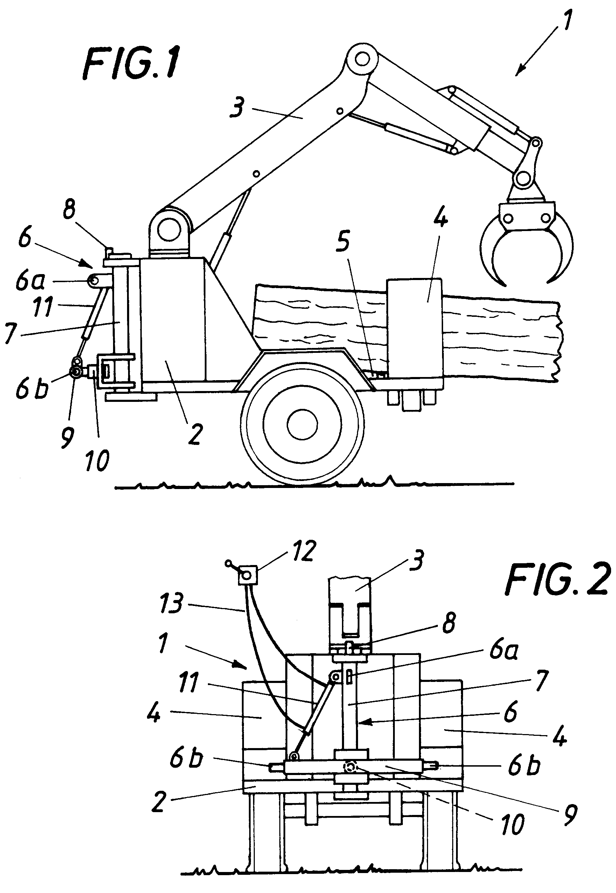

In der Zeichnung ist der Erfindungsgegenstand an Hand eines Ausführungsbeispieles rein schematisch veranschaulicht, und zwar zeigen
- Fig. 1 und 2: einen erfindungsgemäßen Holzrückewagen in Seiten- und Frontansicht.

Ein Holzrückewagen 1 besteht aus einem Einachsanhänger 2, der mit einem Ladekran 3 zum Auf- und Abladen von Holz ausgerüstet ist und eine Klemmzangen 4 tragende Ladefläche 5 zum Transportieren des Holzes aufweist. Ein Anbaubock 6 dient zum Anschluß des Rückewagens 1 an das hydraulische Dreilenkersystems eines nicht weiter dargestellten Schleppers, welcher Anbaubock 6 über ein Schwenklager 7 mit vertikaler Schwenkachse am Anhänger 2 angelenkt ist. Eine Verriegelung 8 erlaubt es, die Schwenkbarkeit des Anbaubockes 6 dem Anhänger 2 gegenüber zu blockieren, um beispielsweise den Holzrückewagen 1 über das Dreilenkersystem anheben und gut manöverieren zu können.

Der Anbaubock 6 weist für den Anschluß des Oberlenkers eine starre Anschlußöse 6a od.dgl. und für den Anschluß der Unterlenker einen Anschlußzapfen 6b od.dgl. bildenden Querholm 9 auf, der über ein Schwenklager 10 mit in Fahrtrichtung liegender horizontaler Schwenkachse abgestützt ist. Zum Fixieren des Querholms 9 in einer beliebigen Schwenklage gibt es eine aus einem Hydraulikzylinder 11 bestehende Sperreinrichtung, welcher Hydraulikzylinder 11 einerseits am Anbaubock 6, anderseits am Querholm 9 angreift und durch eine über ein Absperrorgan 12 führende Verbindungsleitung 13 kurzgeschlossene Zylinderräume aufweist. Wird daher das Absperrorgan 12 geöffnet, läßt sich der Hydraulikzylinder 11 frei bewegen und auch der Querholm 9 ist ungehindert verschwenkbar, wird hingegen das Absperrorgan 12 geschlossen, ist eine weitere Hubbewegung des Hydraulikzylinders 11 unmöglich und damit der Querholm 9 in der jeweiligen Schwenklage verriegelt.

Dieser schwenkbare und verriegelbare Querholm 9 bringt eine entsprechende Relativbeweglichkeit zwischen Schlepper und Einachsanhänger 2 und damit eine gesteigerte Geländegängigkeit des Holzrückewagens mit sich und gewährleistet außerdem bei gesperrtem Querholm 9 eine starre Koppelung zwischen Schlepper und Einachsanhänger, was für eine gewünschte Kraftübertragung vom Rückewagen auf den Schlepper sorgt und die Stabilität und Einsatzfähigkeit des Ladekrans erhöht.

## Patentansprüche

1. Holzrückewagen (1), bestehend aus einem ladekranbestückten Einachsanhänger (2), der einen über ein Schwenklager (7) mit vertikaler Schwenkachse am Fahrgestell angelenkten, bedarfsweise verriegelbaren Anbaubock (6) zum Anbau an das hydraulische Dreilenkersystem eines Schleppers besitzt, dadurch gekennzeichnet, daß der Anbaubock (6) einen an sich bekannten, über ein Schwenklager (10) mit in Fahrtrichtung liegender horizontaler Schwenkachse abgestützten Querholm (9) od. dgl. für den Anschluß der Unterlenker und eine Sperreinrichtung (11) zum Fixieren des Querholms (9) in beliebiger Schwenklage aufweist.

2. Holzrückewagen nach Anspruch 1, dadurch gekennzeichnet, daß die Sperreinrichtung aus einem am Querholm (9) angreifenden Hydraulikzylinder (11) besteht, dessen Zylinderräume miteinander durch eine über ein Absperrorgan (12) führende Verbindungsleitung (13) kurzgeschlossen sind.
